# EUROPÄISCHE PATENTSCHRIFT

(11) **EP 2 158 776 B1**
(45) Veröffentlichungstag und Bekanntmachung des Hinweises auf die Patenterteilung: **11.07.2018**
(21) Anmeldenummer: 08758480.1
(22) Anmeldetag: 13.05.2008
(51) Int. Cl.: H04W 24/06, H04W 24/08, H04W 88/02

(54) **VERFAHREN ZUM TESTEN EINES MOBILFUNKGERÄTS**
METHOD FOR TESTING A MOBILE RADIO DEVICE
PROCÉDÉ DE TEST D'UN APPAREIL DE TÉLÉPHONIE MOBILE

(30) Priorität: 27.06.2007 DE 102007029711; 21.02.2008 DE 102008010290
(43) Veröffentlichungstag der Anmeldung: 03.03.2010
(73) Patentinhaber: Rohde & Schwarz GmbH & Co. KG, 81671 München (DE)
(72) Erfinder: HUBER, Rolf, 82256 Fürstenfeldbruck (DE); SANDHÄGER, Stephan, 82110 Germering (DE); SCHATZ, Walter, 85635 Höhenkirchen (DE)
(74) Vertreter: Beder, Jens
(86) Internationale Anmeldenummer: PCT/EP2008/003817
(87) Internationale Veröffentlichungsnummer: WO 2009/000367

(56) Entgegenhaltungen:
- EP-A- 1 480 379
- EP-A- 1 549 092
- WO-A-2007/022811
- REINER GÖTZ: "R&S TM CRTU Protocol Test Platform User-friendly definition of 2G and 3G signaling scenarios" INTERNET CITATION, [Online] Bd. 193, 25. Juni 2007 (2007-06-25), Seiten 21-23, XP007905988 Gefunden im Internet: URL:http://www2.rohde-schwarz.com/file_748 9/n193_CRTU.pdf> [gefunden am 2008-10-15]

## Beschreibung

Die Erfindung betrifft ein Verfahren zum Testen von Mobilfunkgeräten.

Aus dem Stand der Technik sind Verfahren bekannt, mit denen man Mobilfunkgeräte testen kann, indem man die Mobilfunksignale eines Mobilfunknetzes unter Realbedingung, in einem sogenannten Feldtest, z.B. mittels eines Testnetzes misst. Es wird die Interoperabilität, das Zusammenspiel zwischen Mobilfunkgerät und den Basisstationen ein oder mehrerer Funknetze in einem gemieteten Testnetz oder im realen Feld getestet.

Nachteilig am Stand der Technik ist, dass das Testen in einem angemieteten Testnetz sehr teuer ist. Testet man in einem realen Feld, sind die Bedingungen oft nicht reproduzierbar, da sich die Randbedingungen wie Zellleistung, Timing, Auslastung usw. laufend ändern.

Weiterhin sind aus dem Stand der Technik Verfahren bekannt, die ein Mobilfunknetz in einem Labor simulieren und testen, ob ein Mobilfunkgerät "richtig", d.h. standardkonform, reagiert. Dazu muss der genaue Ablauf der Kommunikationsprotokolle durch Signalisierungsroutinen eingehalten werden. Ein programmierter Ablauf steuert dann einen Protokolltester oder Signalgenerator zur Simulation eines Netzwerks an.

Nachteilig ist die Realitätsferne dieser selbstprogrammierten Tests in einer Testumgebung. Programmierer neigen (unbewusst) dazu, Szenarien zu entwickeln, die zu einfach sind, und damit den Anforderungen an das Mobilfunkgerät unter Realbedingungen nicht genügen. Die Programmierung der Befehlssequenzen ist zudem sehr mühsam und damit sehr fehleranfällig. So sind diese Labortests nur schwer auf die Realität übertragbar und umgekehrt. Sie haben nur eine geringe Aussagekraft, ob das getestete Mobilfunkgerät auch unter Realbedingungen fehlerfrei funktionieren wird. Das Dokument REINER GÖTZ: "R&S TM CRTU Protocol Test Platform User-friendly definition of 2G and 3G signaling scenarios", INTERNET CITATION, Bd. 193 25. Juni 2007 (2007-06-25), Seiten 21-23, offenbart ein Verfahren zum Testen eines Mobilfunkgeräts. Ein Testmobilfunkgerät zeichnet während einer Testfahrt Signalisierungsinformationen auf. Ein Testgerät verwendet die aufgezeichneten Signalisierungsinformationen, um für einen Test eines Mobilfunkgerätes ein Mobilfunknetz zu simulieren.

Aufgabe ist es, ein Verfahren zu entwickeln, das Mobilfunkgeräte realistisch und kostengünstig testet. Das Testen unter Realbedingungen und das Testen im Labor sollen zusammengeführt werden.

Die Aufgabe wird in vorteilhafter Weise durch ein Verfahren nach Anspruch 1 gelöst.

In einem realen Netz werden Informationen über das Netz mittels eines Messgeräts ermittelt. Ein Netzwerkscanner wird z.B. in realer Umgebung auf eine Testfahrt geschickt. Es werden so im Betrieb zumindest eines realen Mobilfunknetzes Informationen über das von den Basisstationen erzeugte reale Netz ermittelt. Alternativ können die Informationen auch in einem Testlabor z.B. bei der Durchführung eines Interoperabilitätstests ermittelt werden. Eine Analysevorrichtung analysiert diese erhaltene Informationen über das zumindest eine Mobilfunknetz. Die analysierten Informationen der Signalisierungssignale werden in eine für ein Testgerät, z.B. einen Signalgenerator, lesbare und damit ausführbare Befehlsfolge umgewandelt. Diese Befehlsfolge kann z.B. in einem bestimmten Format abgespeichert werden. Das Format ist auf das Testgerät abgestimmt, so dass nun ein reproduzierbares Testszenario vorliegt, das durch das Testgerät nachgespielt werden kann. Mit dieser Befehlsfolge wird ein Testgerät angesteuert, welches somit die reale Netzwerkumgebung simuliert.

In den Unteransprüchen sind vorteilhafte Weiterbildungen des erfindungsgemäßen Verfahrens sowie des erfindungsgemäßen Testgeräts ausgeführt.

Auf dieser Testfahrt sendet ein Mobilfunkgerät Signale und Antwortsignale als digital codierte elektromagnetische Wellen im Gigahertz-Bereich an die Basisstationen und empfängt umgekehrt Signale von den Basisstationen. Ein Messgerät zur Ermittlung der Informationen des Mobilfunknetzes misst alle von den Basisstationen ankommenden Funksignale. Von Interesse sind dabei die in den Funksignalen digital codierten Protokolldaten, nicht die Nutzdaten. Im Folgenden werden diese Protokolldaten der Basisstationen Signale, die des damit kommunizierenden Mobilfunkgeräts Antwortsignale genannt.

Das Mobilfunkgerät ist so präpariert, dass es die von den Basisstationen empfangenen Signale und an die Basisstationen gesendeten Antwortsignale an die Analysevorrichtung leitet. Die Analysevorrichtung empfängt die von dem präparierten Mobilfunkgerät gesendeten Daten. Diese Daten werden vom Analysegerät analysiert und auf der Festplatte gespeichert. Die Analysevorrichtung analysiert dabei auch netzfremde Signale, die durch den verwendeten Netzwerkscanner ebenfalls ermittelt werden. Die Gesamtheit an Informationen wird in einem gemeinsamen Log-File abgespeichert. Ein präpariertes Mobilfunkgerät oder Testmobilfunkgerät im Sinne der Erfindung ist dabei ein Mobilfunkgerät, welches über eine Schnittstelle Informationen über zwischen dem Mobilfunkgerät und zumindest einer Basisstation übermittelte Nachrichten ausgeben kann. Zudem werden von dem Testmobilfunkgerät Informationen über das Funkfeld übermittelt.

Folgende Informationen über das zumindest eine Mobilfunknetz werden von der Analysevorrichtung analysiert und zumindest teilweise zur Erzeugung der Befehlsfolge verwendet:
a.) Alle notwenigen Funkzellen, insbesondere die IDs der Basisstationen der Funkzellen und Zellparameter wie z.B. das Zelltiming bei UMTS.
b.) Ermittlung einer notwendigen Registrierung. Sollte keine Registrierung vorhanden sein, so bedient man sich mit einer Standardregistrierung.
c.) Alle notwendigen Schicht 3- Nachrichten. Die Schicht 3 ist im OSI-Modell die Vermittlungsschicht.
d.) Alle für das Nachspielen der Zellleistung notwendigen Zellinformationen.
e.) Die realen Zeitabläufe, insbesondere die zeitliche Lage benachbarter Zellen zueinander.
f.) Ablauf der Sicherheitsalgorithmen. Da die im Netz genutzten Algorithmen proprietär sind, verwendet die Wiedergabe eine standardisierte Test-USIM und auf Testspezifikationen basierende Algorithmen, wie z.B. die durch die Arbeitsgruppe 3GPP in der TS 34.108.109 beschriebenen.

Nun werden die ermittelten Informationen in eine lesbare Befehlsfolge umgewandelt und vorzugsweise gespeichert. Sollten die Befehle der Befehlsfolge bei der Umwandlung in das lesbare Format für die Simulation einer Verbindung zwischen dem Mobilfunkgerät und der emulierten Basisstation nicht ausreichen, wird vorzugsweise automatisch der Grund ermittelt, warum das Testszenario nicht nachspielfähig ist, und es werden fehlende Befehle in der Befehlsfolge ergänzt.

In einem weiteren Schritt wird die Befehlsfolge auf einer graphischen Benutzeroberfläche in einer Liste aufgelistet. Dabei wird vorzugsweise jedem einzelnen Befehl eine Zeile zugeordnet. Dabei können z.B. folgende Daten geändert werden: Es können Befehle übersprungen werden, kopiert, eingefügt und gelöscht werden. Zudem ist eine Editierung der Schicht 3 -Daten möglich. Das Editieren einzelner Nachrichten geschieht z.B. mittels eines Editors. Mit der so erhaltenen Befehlsfolge wird ein Testgerät angesteuert.

Das Testgerät ist vorzugsweise ein Protokolltester. Dieser Protokolltester simuliert in einem Testlabor ein oder mehrere Mobilfunknetze. Das Testgerät liest dazu die von dem Analysegerät stammende lesbare Befehlsfolge ein und wandelt diese wieder in die in der Realumgebung gemessenen Signale um und reproduziert damit ein oder mehrere Mobilfunknetze. Der Protokolltester tritt damit in Interaktion mit einem zu testenden Mobilfunkgerät. Der Protokolltester sendet diese Funksignale an das zu testende Mobilfunkgerät. Dabei reagiert das zu testende Mobilfunkgerät seinerseits auf die von dem Protokolltester gesendeten Daten und sendet Antwortsignale in dem simulierten Mobilfunknetz, mit dem es kommuniziert. Die erwarteten Antwortsignale sind aus der ursprünglichen Aufnahme des realen Szenarios bekannt und in der tabellarischen Befehlsfolge als nicht ausführbare Befehle gekennzeichnet. Während der Simulation werden die entsprechenden Nachrichten durch das zu testende Mobilfunkgerät gesendet. Diese Nachrichten werden durch den Protokolltester erwartet und mit den Nachrichten, die in der Befehlsfolge als eingehende Nachrichten gekennzeichnet sind verglichen. Die weitere Ausführung der nachfolgenden Befehlszeilen der Folge wird erst durchgeführt, wenn die erwartete Nachricht, d.h. das Antwortsignal des zu testenden Mobilfunkgeräts eingetroffen ist.

Dabei wird getestet, ob das Mobilfunkgerät die Kommunikationsprotokolle gemäß einem für das simulierte Mobilfunknetz gültigen Standard einhält und auf ankommende Signale von Basisstationen erwartungsgemäß reagiert. Über das simulierte Mobilfunknetz wird das Mobilfunkgerät angerufen. So wird beispielsweise das korrekte Reagieren auf einen eingehenden Anruf getestet.

Der Protokolltester kann auch nur einen Teil der Befehlsfolge abspielen. Dabei kann es passieren, dass diese Teil-Befehlsfolge unvollständig ist. In diesem Fall werden die fehlenden Befehle vom Protokolltester automatisch ergänzt.

Die Befehlsfolgen werden über beispielsweise ein Display ausgegeben und sind über eine graphische Benutzeroberfläche editierbar. Dazu werden Befehle der abzuspielenden Befehlsfolge in einer Liste aufgelistet. Mit der Maus oder über Schaltflächen bedient man den Editor. Einzelne oder mehrere Befehle können geändert werden, kopiert und an einer anderen Stelle eingefügt werden. Es ist auch möglich, einen oder mehrere Befehle der Befehlsfolge zu löschen. So können auch neue Testszenarien entwickelt werden, ohne dass weitere Testfahrten in einer Realumgebung nötig sind.

Die Testszenarien werden vorzugsweise gespeichert und können beliebig oft abgespielt werden. Bei der Kommunikation zwischen dem zu testenden Mobilfunkgerät und dem Protokolltester gibt es zwei Modi. Beim ersten Modus erwartet der Protokolltester auf seine an das zu testende Mobilfunkgerät gesendeten Signale die Antwortsignale exakt so, wie sie bei der Aufnahme im realen Mobilfunknetz oder einem vorangegangenen Labor-Interoperabilitätstest ermittelten wurden und in der Befehlsfolge als Antwortsignale aufgelistet sind. Stimmen die erwarteten Antwortsignale nicht mit den vom zu testenden Mobilfunkgerät tatsächlich zurückgesendeten Antwortsignalen überein, so wird der Test sofort terminiert. Dieser Modus heißt "strenger Modus".

In einem zweiten Modus sendet der Protokolltester seine Daten entsprechend der abzuspielenden Befehlsfolge an das zu testende Mobilfunkgerät. Das Mobilfunkgerät antwortet daraufhin dem Protokolltester durch Rücksendung eines Antwortsignals. Dabei kann es in der Reihenfolge der zurückgesendeten Antwortsignale Abweichungen von der erwarteten Reihenfolge geben. In dem zweiten Modus dürfen die vom Mobilfunkgerät gesendeten Antwortsignale von den erwarteten abweichen, sofern der zugrundeliegende Mobilfunkstandard eine solche Abweichung zulässt, also nicht beispielsweise eine Reihenfolge der Nachrichten vorschreibt. Das Testszenario wird trotzdem fortgesetzt, indem die zugrundeliegende Befehlsfolge weiter zeilenweise abgearbeitet wird. Dieser Modus heißt "toleranter Modus". Dieser Modus hat dann den Vorteil, wenn sich verschiedene Mobilfunkgeräte geringfügig anders verhalten und man mit der Abspielsoftware Szenarien für Regressionstests einsetzt.

Sowohl im strengen als auch im toleranten Modus gibt es die Möglichkeit, auf der Basis einzelner Mobilfunkdaten Uplink-Nachrichten - das sind die Daten, die das Mobilfunkgerät an die Basisstationen sendet - bitgenau abzugleichen. Dies bezeichnet man als "constraint matching".

In einem bevorzugten Testszenario kann der Protokolltester die Empfangs- und Sendeleistung testen, indem er unterschiedliche Zellleistungen simuliert: Dazu senkt der Protokolltester die Sende- und Empfangsleistung einer simulierten Basisstation X, so dass das Mobilfunkgerät keinen oder nur schwer Funkkontakt zur Basisstation X aufnehmen kann. Daraufhin wird getestet, ob das Mobilfunkgerät wie erwartet zur nächsten Basisstation Y wechselt, die eine bessere Sende- und Empfangsleistung aufweist als die Basisstation X. Ein einem weiteren Testszenario kann der Protokolltester die Leistung einer simulierten Basisstation X erhöhen und testen, ob das Mobilfunkgerät zu dieser Basisstation X wechselt, wenn es vorher mit der Basisstation Y kommuniziert hat, die eine schwächere Sende- und Empfangsleistung als die Basisstation X hat. Diese Wechsel von einer Basisstation zu nächsten bezeichnet man als "Handover" und können durch Vorgabe von gezielt definierten Leistungen induziert werden.

In diesen Szenarien passt der Protokolltester in gleichen Zeitabständen die Zellleistungen der wichtigsten Zellen entsprechend der aufgenommenen Zellleistungen an. Um das Testszenario von äußeren elektromagnetischen Störungen zu schützen, befindet sich das Mobilfunkgerät vorzugsweise in einer Schirmkammer, die wie ein Faradayscher Käfig wirkt. Die Tests in Laborumgebung sind reproduzier- und editierbar und damit rascher und kostengünstiger durchführbar. Es muss mit dem Messgerät und einem präparierten Mobilfunkgerät nur einmal unter Realbedingungen gemessen werden, um die Signalisierungsinformationen aufzuzeichnen. Das Messgerät wird vorzugsweise neben dem präparierten Mobilfunkgerät oder Testmobilfunkgerät eingesetzt, denn das Messgerät ist schneller, umfassender und genauer im Hinblick auf eine Vielzahl von Informationen über das Mobilfunknetz bzw. die Mobilfunknetze. Das Mobilfunkgerät ist während eines realen Feldtests und deren Funksignale nicht kalibriert. Es kann auch nicht (viele) Funkzellen ausereichend genau analysieren. Mit dem Messgerät hingegen gehen keine Informationen verloren und das Nachspielen im Labor entspricht noch genauer den realen Bedingungen. Die Umwandlung der Daten in die lesbare Befehlsfolge muss nicht manuell vorgenommen werden, sondern geschieht automatisch. Neue Testszenarien können durch die Editierbarkeit erstellt werden, ohne neue Testfahrten in Realumgebung zu erfordern.

Beim Nachspielen während des Tests kann das zu testende Mobilfunkgerät auch an die Stelle des Testmobilfunkgeräts treten. D.h. im Test sich ergebende Szenario wird aufgezeichnet und eine neue Befehlsfolge hieraus generiert. Aspekte der Erfindung werden anhand der Zeichnung in der nachfolgenden Beschreibung näher erläutert. Es zeigen:
- Fig. 1: eine schematische Abbildung zur Durchführung des erfindungsgemäßen Verfahrens.
- Fig. 2: einen Ablaufplan zur Durchführung des Verfahrens,
- Fig. 3: eine Übersicht des gesamten Verfahrens,
- Fig. 4: die graphische Benutzeroberfläche einer Software zur Umwandlung der Daten in lesbare und ausführbare Befehlsfolgen,
- Fig. 5: eine graphische Benutzeroberfläche der Software für das Editieren der Befehlsfolgen,
- Fig. 6: eine graphische Benutzeroberfläche der Software zum Erstellen von Testszenarien, und

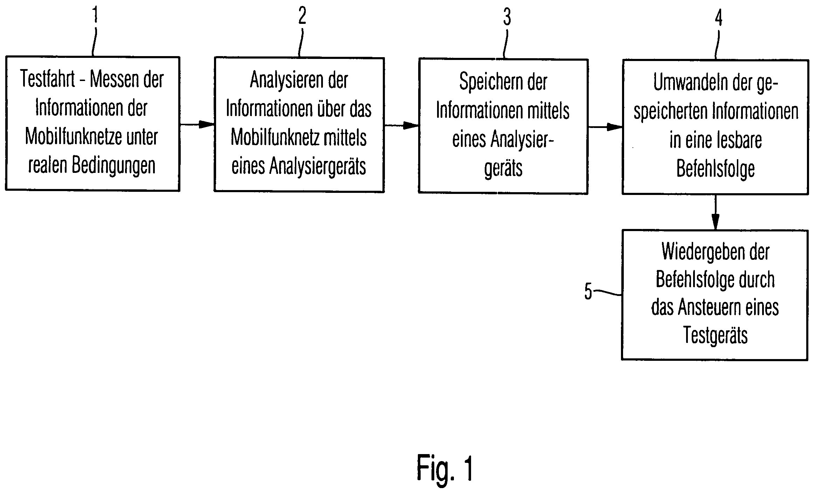

Figur 1 bietet einen schematischen Überblick des Verfahrens. In einem ersten Schritt 1 werden unter realen Bedingungen auf einer Testfahrt Informationen zumindest eines Mobilfunknetzes unter Verwendung eines präparierten Mobilfunkgeräts gemessen. In einem weiteren Schritt 2 analysiert eine Analysiervorrichtung die Informationen über das zumindest eine Mobilfunknetz. Im nächsten Schritt 3 werden die Informationen mittels der Analysiervorrichtung gespeichert. Das Speichermedium kann dabei eine Festplatte sein.

In einem weiteren Schritt 4 werden die gespeicherten Informationen in eine lesbare Befehlsfolge umgewandelt. Eine lesbare Befehlsfolge ist eine Abfolge von Steuerbefehlen, die mittels des Signalgenerators zur Erzeugung von Mobilfunksignalen ausführbar ist. Im letzten Schritt 5 wird die Befehlsfolge wiedergegeben durch das Ansteuern einer Testvorrichtung. Die Testvorrichtung, z. B. ein Protokolltester simuliert die Vorgänge in dem aufgezeichneten realen Funknetz dabei durch zeilenweises Abarbeiten der Befehlsfolge. Dabei wird wie im realen Netz zum Teil auf eine Antwort des eingebuchten oder sich einbuchenden zu testenden Mobilfunkgeräts gewartet. Steht eine solche Antwort aus, geht der Protokolltester in einen Wartezustand. Die erwarteten Antwortsignale sind als nicht auszuführend gekennzeichnet, jedoch in der Befehlsfolge enthalten.

Bei Auftreten einer zu diesem Zeitpunkt nicht erwarteten Nachricht des zu testenden Mobilfunkgeräts, also einer Abweichung von einem erwarteten Befehl, muss zwischen den beiden Modi "tolerant" und "streng" unterschieden werden. Im strengen Modus führt dies zum Abbruch mit einer entsprechenden Fehlerausgabe, während im toleranten Modus zunächst weiter auf das Eintreffen der erwarteten Nachricht, bzw. des Antwortsignals gewartet wird. Trifft dies noch ein, so wird im toleranten Modus das Verfahren fortgeführt.

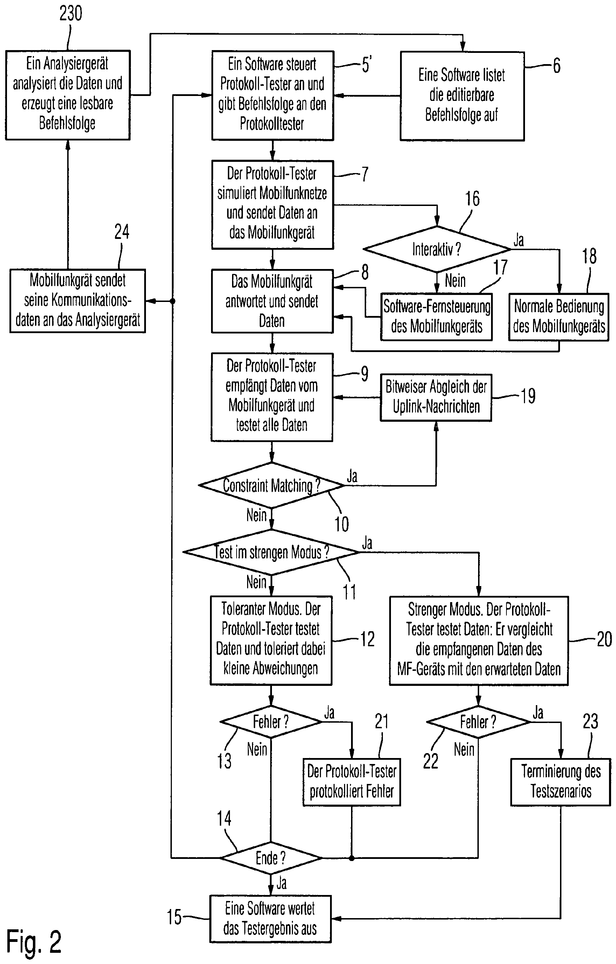

Figur 2 zeigt einen genaueren Ablauf des Verfahrens. Die von der Analysiervorrichtung zur Verfügung gestellte lesbare Befehlsfolge wird in Schritt 6 in einen Speicher geladen und auf einer grafischen Benutzeroberfläche in einer Liste sichtbar gemacht. Diese Liste der Befehlsfolge kann nun editiert werden.

Man hat dabei die Möglichkeit, neue Testszenarien zu erstellen und unter einem anderen Dateinamen abzuspeichern oder auch verkürzte Szenarien durch Herausgreifen einer Sequenz von Befehlen aus der gesamten Befehlslage zu erzeugen. Beispielsweise, wenn die vom Feldtest auf der Testfahrt erhaltenen Daten, die Daten von drei Basisstationen beinhalten, kann man die Befehlsfolge so abändern, dass nur noch die Signale von nur zwei Basisstationen enthalten sind. Die zeilenweise aufgeführten Befehle sind einzeln auswählbar.

In Schritt 5' wird die Abarbeitung der Befehlsfolge gestartet und ein Protokolltester zum Simulieren des Netzes angesteuert. Dieser Protokolltester reproduziert so zumindest ein Mobilfunknetz (Schritt 7), indem er die Steuerungsbefehle entgegen nimmt und wieder in Mobilfunksignale umwandelt.

Nun wird die Abfrage 16 abgearbeitet, ob im interaktiven Modus gearbeitet wird oder ob das zu testende Mobilfunkgerät ferngesteuert werden soll. Im ersten Fall 18 kann auf diese empfangenen Signale interaktiv reagiert werden, dass heißt, das Mobilfunkgerät wird über das Tastenfeld normal, d.h. durch einen Bediener, bedient. In einem zweiten Fall 17 wird das Mobilfunkgerät dagegen ferngesteuert, sofern eine Eingabe an dem Mobilfunkgerät während des Tests erforderlich ist. In einem nächsten Schritt 8 reagiert das präparierte Mobilfunkgerät auf die vom Protokolltester empfangenen Signale. Nun kommt die Abfrage 10, ob der Test im "Constraint Matching"-Modus laufen soll oder nicht.

Ist das sogenannte "Constraint Matching" eingeschaltet, so erfolgt im Fall 19 ein bitweiser Abgleich der Uplink-Daten, die vom Mobilfunkgerät an die simulierte Basisstation, also den Protokolltester gesendet werden. Wenn der "Constraint Matching"-Modus nicht eingeschaltet ist, folgt die Abfrage 11, ob der Test im strengen Modus ablaufen soll.

Im strengen Modus 20 vergleicht der Protokolltester, wie schon ausgeführt wurde, die vom Mobilfunkgerät gesendeten Antwortsignale genau mit den erwarteten Signalen. Es folgt die Abfrage (Schritt 22): Gibt es eine Abweichung? Wenn ja, dann erfolgt sofort die Terminierung (Schritt 23) des Testszenarios.

Ist hingegen der tolerante Modus 12 aktiviert, testet der Protokolltester die vom Mobilfunkgerät gesendeten Signale und toleriert kleinere Abweichungen, z.B. in der Befehlsfolge. Diese kleinen Abweichungen können die Reihenfolge von Antwortsignalen oder aber die Inhalte der zurückgesendeten Antwortsignale betreffen.

Es folgt die Abfrage 13, ob ein Fehler aufgetreten ist, der innerhalb des Toleranzbereichs liegt. Wenn ja, dann erfolgt eine Protokollierung 21 über den Fehler, der Test wird aber weiter geführt. Das zu testende Mobilfunkgerät sendet, wie im Feldtest das präparierte Mobilfunkgerät unter Realbedingungen, alle von ihm gesendeten und empfangenen Signale an die Analysiervorrichtung.

Es folgt die Abfrage 14: Ist nun die ganze Befehlsfolge abgearbeitet? Wenn nein, steuert die Software mit dem nächsten Befehl in der Befehlsfolge den Protokolltester weiterhin an. Wenn ja, folgt das Testende. Eine Testauswertungsvorrichtung wertet in Schritt 15 das Testergebnis aus.

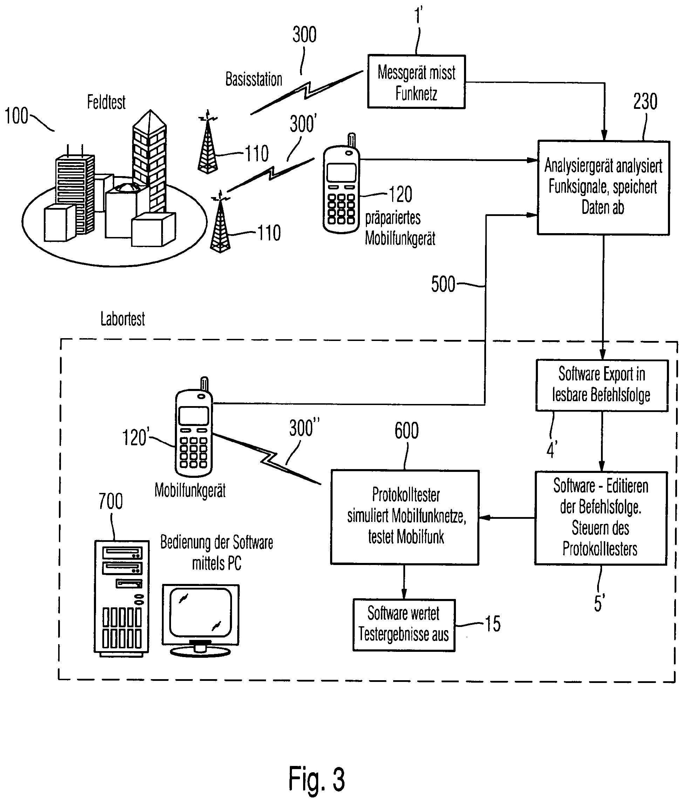

In Figur 3 ist in anschaulicher Form das gesamte Verfahren in seinen wesentlichen Ablauf in Form von Funktionsblöcken dargestellt. In einem Feldtest in realer Umgebung befinden sich mehrere Basisstationen 110 ein oder mehrerer Mobilfunknetze. Ein präpariertes Mobilfunkgerät 120 sendet Signale 300 aus und empfängt Antwortsignale 300 im Downlink von einer der Basisstationen 110. Diesen zur Informationsübertragung zwischen dem präparierten Mobilfunkgerät 120 und einer Basisstation ausgetauschten Funksignalen überlagert sind Signale der übrigen Basisstationen, z.B. benachbarter Zellen.

Die Signale 300 dieser Basisstationen 110 und die Signale, die das Mobilfunkgerät 120 sendet, werden von einer Messvorrichtung 1', z.B. einem Netzwerkscanner gemessen. Das präparierte Mobilfunkgerät 120 gibt seine gesendeten und empfangenen Antwortsignale und Signale 300' an eine Analysevorrichtung 230 weiter. Ebenso gibt die Messvorrichtung 1' die von ihr empfangenen Signale an die Analysevorrichtung 230 weiter. Die Analysiervorrichtung 230 analysiert die Signale 300 und 300' und speichert die daraus gewonnenen Daten ab. Dabei kann im Gegensatz zu dem präparierten Mobilfunkgerät das Messgerät auch Informationen über solche Mobilfunknetze ermitteln, in denen über das Mobilfunkgerät keine Informationen verfügbar sind. Zudem sind die von dem Messgerät ermittelten Informationen über die Netze genauer, als die von dem präparierten Mobilfunkgerät ermittelten.

Diese Daten werden von der Analysevorrichtung exportiert, in eine lesbare Befehlsfolge umgewandelt und in einem für den Protokolltester ausführbaren Format abgespeichert. Eine Software erlaubt das Editieren der Befehlsfolge. Mit der Befehlsfolge wird letztlich der Protokolltester angesteuert. Dabei muss die Befehlsfolge nicht ausschließlich vom Analysiergerät stammen, sondern kann selbst mit der Software ergänzend programmiert werden, indem beispielsweise weitere Befehle ergänzt werden. Die Ergänzung kann auch automatisch erfolgen. Die Befehlsfolge wird hierzu auf Vollständigkeit überprüft. "Vollständigkeit" bedeutet, dass alle Befehle zum Erzeugen eines standardkonformen Signals durch das Testgerät vorhanden sind. Werden bei dieser Überprüfung fehlende Befehle ermittelt, z.B. fehlende Registrierungssequenzen, so wurden diese automatisch hinzugefügt.

Der Protokolltester 600 führt die Befehle aus und reproduziert damit zumindest ein Mobilfunknetz. Das zu testende Mobilfunkgerät 120', sendet Signale 300" als Antwortsignale aus 300". Die gesendeten und empfangenen Signale 300" werden von dem zu testenden Mobilfunkgerät 120' an die Analysiervorrichtung 230 weitergegeben. Eine Testauswertungsvorrichtung 15 wertet die Testergebnisse aus.

Wie es durch den Pfeil 500 vereinfacht angedeutet ist, kann während des Nachspielens eines Szenarios bereits wieder eine Aufnahme der von dem zu testenden Mobilfunkgerät ermittelten Daten erfolgen. In diesem Fall wird das zu testende Mobilfunkgerät 120' gleichzeitig zu einem Testmobilfunkgerät. Hierzu muss es in der Lage sein, die Daten z.B. über eine zusätzliche Schnittstelle zu übertragen.

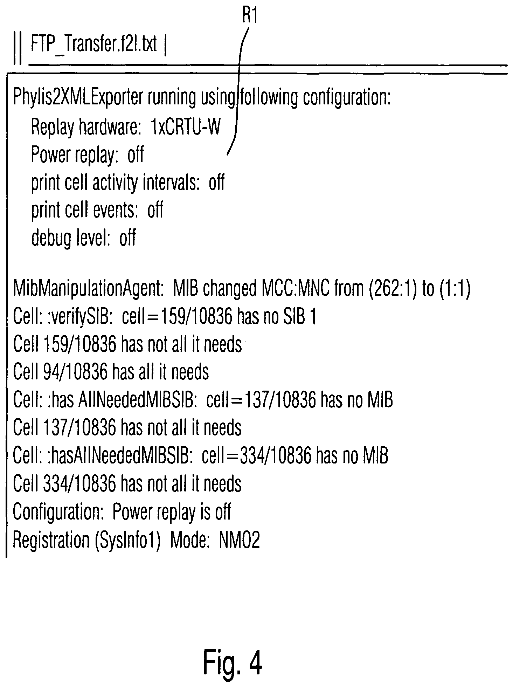

In Figur 4 werden in einer Benutzeroberfläche die einzelnen Vorgänge beim Export der Daten in einem lesbaren Format in der Form eines Reports R1 aufgelistet. Alle notwendigen Änderungen der Testszenarien während des Exportprozesses werden in diesem Report mitprotokolliert. Sollten die Daten für eine Simulation nicht ausreichen, wird der Grund ermittelt, warum das Testszenario nicht nachspielfähig ist. Fehlende Befehle in der Befehlsfolge werden dabei automatisch ergänzt.

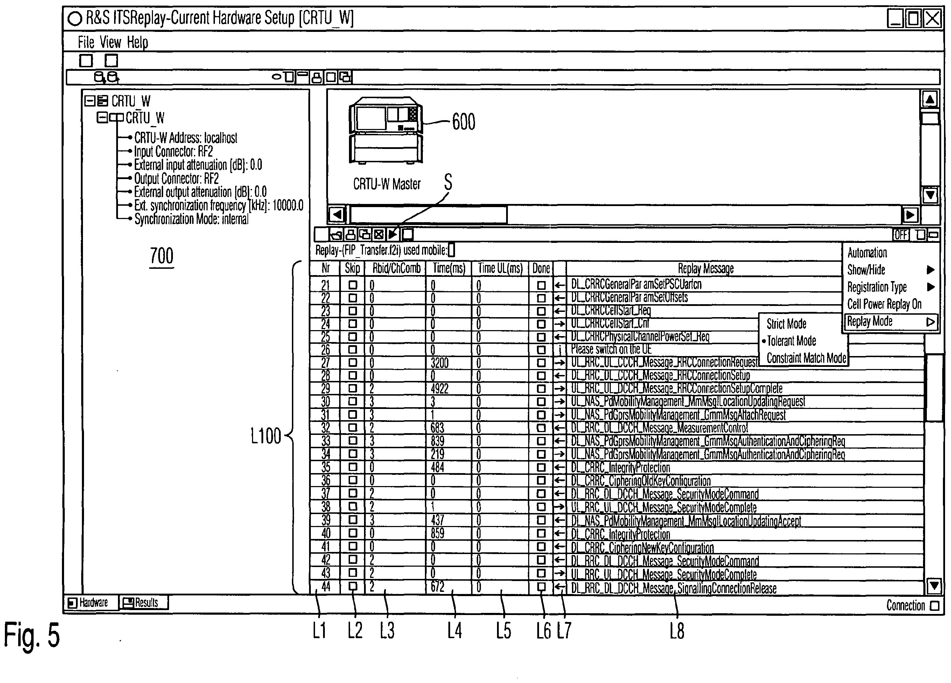

In Figur 5 präsentiert sich die Benutzeroberfläche der Software, mit der man Testszenarien mit dem Protokolltester 600 flexibel abspielen kann.

In der Benutzeroberfläche ist ein Bereich 700 ausgebildet, in dem die aktuelle Konfiguration zum Durchführen des Tests angegeben ist. Im vorliegenden Fall wird das Testszenario mit Hilfe des Geräts CRCU-W nachgespielt. Zur Durchführung des Tests sind ferner noch einige Details angegeben, wie beispielsweise die Nutzung eines bestimmten von mehreren Hochfrequenzein- und/oder ausgängen. Im dargestellten Beispiel wird der Hochfrequenzeingang RF2 genutzt. Zudem sind eine Eingangsdämpfung und eine Ausgangsdämpfung einstellbar. Beide sind im dargestellten Beispiel auf 0dB also keine Dämpfung eingestellt. Schließlich sind noch Angaben zur Synchronisation gemacht. Das hier verwendete Gerät kann sowohl mittels einer internen Synchronisationsquelle oder einer externen Synchronisationsquelle synchronisiert werden.

Im dargestellten Beispiel ist rechts oben eine Darstellung des Protokolltesters 600 gezeigt. Für das erfindungsgemäße Verfahren bedeutsam ist vor allem die Liste L100 der Befehlsfolgen rechts unten. Mit der Software können Befehlsfolgen in die Liste L100 geladen und editiert werden. Die Befehlfolge stammt aus einem Export von Messdaten in einem Format, welches der Protokolltester 600 lesen und ausführen kann, wobei einzelne Befehle in dieser Benutzeroberfläche auch ergänzend programmiert werden und damit editiert werden können.

In der Liste L100 wird pro Zeile ein Befehl 501 der Befehlsfolge mit zusätzlichen Informationen und Schaltflächen aufgelistet. Diese Liste L100 umfasst 8 Spalten L1 bis L8, die im Folgenden erklärt werden.

Die Spalte L1 zeigt eine laufende Nummer der jeweiligen Befehlszeile an. Die Spalte L2 sieht für jede Zeile eine Schaltfläche in Form eines Auswahlkästchens vor. Setzt man durch Anklicken des Auswahlkästchens mit der Maus einen Haken, so wird der Befehl in dieser jeweiligen Zeile übersprungen. Ist kein Haken gesetzt, so wird der Befehl in der jeweiligen Zeile ausgeführt. Auf diese Weise lassen sich flexibel Befehlsfolgen generieren.

Die Darstellung zeigt eine Benutzeroberfläche für eine UMTS-Mobilfunkverbindung. Dabei wird in Spalte L3 die "Radio Bearer id" angegeben.

Die vierte Spalte L4 gibt die relative Ausführungszeit des jeweiligen Befehls in Millisekunden als Verzögerung gegenüber des vorangegangenen Befehls an. Werden mehrere Befehle parallel übertragen, so wird die im jeweiligen Strang auftretende Verzögerung gegenüber dem vorangegangenen Befehl desselben Strangs angegeben. Die nächste Spalte L5 gibt die relative Ausführungszeit des Uplinks in Millisekunden an. Die Spalte L6 zeigt in Form eines Auswahlkästchens an, ob der jeweilige Befehl bereits abgearbeitet worden ist. Ist der Haken gesetzt, ist der jeweilige Befehl bereits abgearbeitet. Das Auswahlkästchen ist nicht editierbar und dient nur der Anzeige.

Die Spalte L7 zeigt mit Pfeilsymbolen an, ob es sich um einen Uplink- oder einen Downlink-Befehl handelt:
Für einen Uplink-Befehl erscheint das Grafiksymbol "Pfeil nach rechts" und bei einem Downlink-Befehl erscheint das Grafiksymbol "Pfeil nach links". Dabei ist zu beachten, dass lediglich die Downlink-Befehle tatsächlich ausgeführt werden. Die Uplink-Befehle sind vielmehr die erwarteten Antwortsignale des zu testenden Mobilfunkgeräts und mittels der Pfeilrichtung als nicht ausführbar gekennzeichnet. Diese Befehle bilden die Grundlage der Überprüfung, ob das zu testende Mobilfunkgerät wie erwartet reagiert hat.

Die Spalte L8 letztlich zeigt die Befehle selbst an, welche editierbar sind. Es können Befehle gelöscht, geändert, hinzugefügt und verschoben werden. Es ist auch möglich aus einer aufgelisteten Befehlfolge einen Teil herauszuschneiden und nur diese ausgeschnittene Befehlfolge über den Startknopf S zu starten. Das Editieren kann auch mittels eines separaten Programms erfolgen, welches bei Auswahl des zu ändernden Befehls aufgerufen wird.

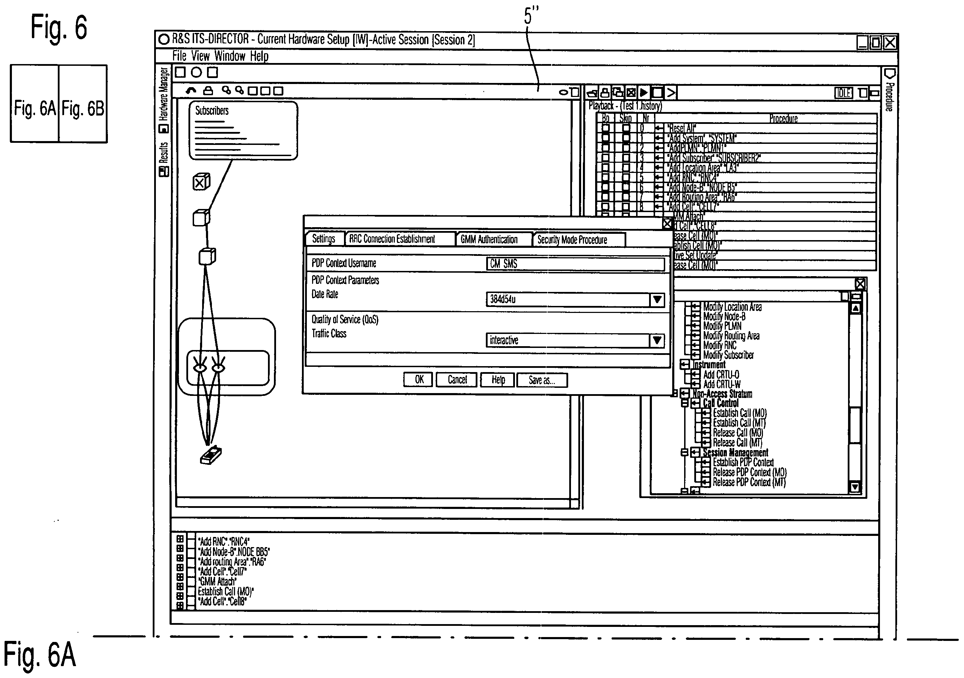

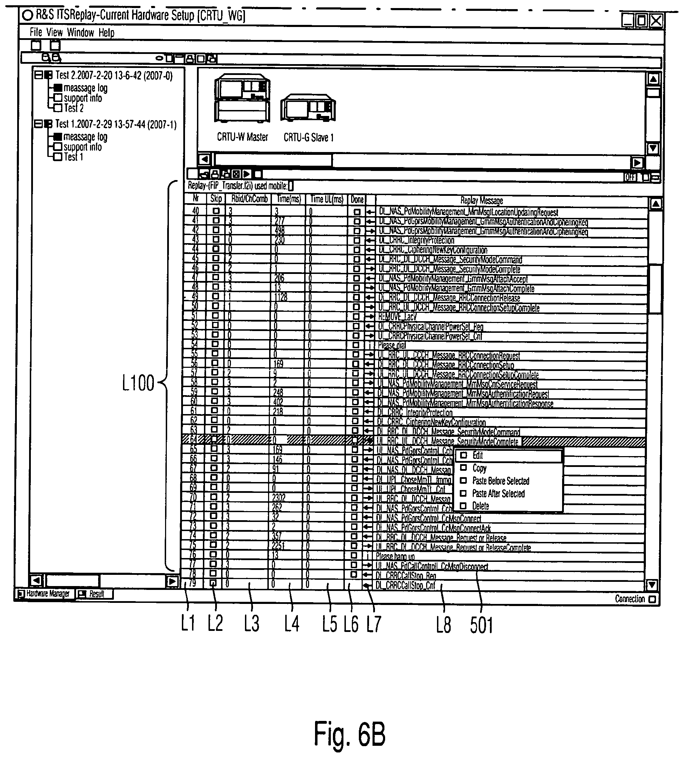

In der Figur 6 wird im oberen Fenster die Benutzeroberfläche der Software 5" gezeigt, mit der man völlig neue Testszenarien interaktiv erstellen kann. Ein hochflexibles Testen auf der Basis von Feldtestdaten ist damit möglich. Das spart erheblich an Kosten, denn eine Testfahrt in Realumgebung ist nur einmal notwendig. Zudem sind nicht nur Reproduktionen von Feldtests, sondern ohne Einschränkungen auch Reproduktionen von anderen Labortests möglich. In Figur 6 im Fenster unten ist noch einmal die Benutzeroberfläche der Software gezeigt, die in Fig. 5 ausführlich erklärt ist.

Das erfindungsgemäße Verfahren ist nicht auf 2. die dargestellten Aspekte beschränkt. Insbesondere sind auch einzelne Kombinationen von Merkmalen in vorteilhafter Weise möglich. Ferner wird darauf hingewiesen, dass die erläuterten Schemata der Fig. 1-7 lediglich der Illustration dienen.

## Patentansprüche

1. Verfahren zum Testen eines Mobilfunkgerätes mit folgenden Verfahrensschritten:
Ermitteln von Informationen über zumindest ein reales Mobilfunknetz mittels eines Messgerätes (1'), sowie von zusätzlichen Informationen über das Mobilfunknetz mittels eines Mobilfunkgerätes (120), wobei das Mobilfunkgerät (120) dafür ausgelegt ist, die von zumindest einer Basisstation (110) des Mobilfunknetzes empfangenen Signale (300) und die an die zumindest eine Basisstation (110) gesendeten Antwortsignale (300') an eine Analysevorrichtung (230) zu übertragen, Analysieren der Informationen, erhalten durch das Messgerät (1') und der zusätzlichen Informationen, erhalten durch das Mobilfunkgerät (120), mittels der Analysevorrichtung (230), umfassend das Analysieren sämtlicher an dem Mobilfunkgerät (120) empfangener Signale (300) und gesendeter Antwortsignale (300') mittels der Analysevorrichtung (230),
Umwandeln der Informationen und der zusätzlichen Informationen in eine gemeinsame Befehlsfolge, und
Simulieren des realen Mobilfunknetzes durch Ausführen zumindest eines Teils der Befehlsfolge durch ein Testgerät (600).

2. Verfahren nach Anspruch 1, wobei das Testgerät (600) ein Protokolltester ist, der die Befehlsfolge in Interaktion mit einem Mobilfunkgerät (120'), in einem Testszenario abspielt.

3. Verfahren nach Anspruch 2, wobei in dem Testszenario der Protokolltester mehrere unterschiedliche Mobilfunknetze simuliert.

4. Verfahren nach einem der Ansprüche 2 bis 3, wobei ein Teil der Befehlsfolge ausgewählt wird, und dass der Protokolltester diesen Teil der Befehlsfolge zur Simulation abspielt.

5. Verfahren nach einem der Ansprüche 2 bis 4, wobei die Befehlsfolge vom Protokolltester um fehlende, zur Durchführung der Simulation notwendige Befehle automatisch ergänzt wird.

6. Verfahren nach einem der Ansprüche 2 bis 5, wobei der Protokolltester im Testszenario unterschiedliche Zellleistungen erzeugt und somit das Mobilfunkgerät (120') auf seine Empfangs- und Sendeleistung testet.

7. Verfahren nach einem der Ansprüche 1 bis 6, wobei die Befehlsfolge zunächst ausgegeben wird und über eine grafische Benutzeroberfläche editierbar ist, wobei mit der editierten Befehlsfolge das Testgerät (600) angesteuert wird.

8. Verfahren nach einem der Ansprüche 1 bis 7, wobei das Testgerät (600) in einem ersten Modus während der Simulation Antwortsignale (300") exakt so erwartet, wie sie bei der Ermittlung der Information des Mobilfunknetzes empfangen wurden, und dass, wenn ein anderes als das erwartete Antwortsignal (300") empfangen wird, das Testszenario terminiert wird.

9. Verfahren nach einem der Ansprüche 1 bis 8, wobei in einem zweiten Modus während der Simulation empfangene Antwortsignale (300") von erwarteten Antwortsignalen (300'), wie sie bei der Ermittlung der Information des Mobilfunknetzes empfangen wurden, in ihrer Reihenfolge, abweichen können, wobei das Testszenario fortgesetzt wird.

10. Verfahren nach einem der Ansprüche 8 oder 9, wobei auf der Basis einzelner Antwortsignale (300") des Mobilfunkgeräts (120') ein bitgenaues Abgleichen von vollständigen Antwortsignalen (300") und dem erwarteten Antwortsignal (300') durchgeführt wird.

## Claims

1. Method for testing a mobile radio device with the following method steps:
- determination of information about at least one real mobile radio network by means of a measuring device (1'), and of additional information about the mobile radio network by means of a mobile radio device (120),
the mobile radio device (120) being designed to transmit the signals (300) received from at least one base station (110) of the mobile radio network and the response signals (300') transmitted to the at least one base station (110) to an analysis device (230),
- analysis of the information obtained by the measuring device (1') and of the additional information obtained by the mobile radio device (120) by means of the analysis device (230),
comprising the analysis of all the signals (300) received at the mobile radio device (120) and the transmitted response signals (300') by means of the analysis device (230),
- conversion of the information and of the additional information into a common sequence of instructions, and
- simulation of the real mobile radio network by implementation of at least a part of the sequence of instructions by a test device (600).

2. Method according to claim 1,
wherein the test device (600) is a protocol tester which plays back the sequence of instructions in interaction with a mobile radio device (120') in a test scenario.

3. Method according to claim 2,
wherein the protocol tester simulates a plurality of different mobile radio networks in the test scenario.

4. Method according to one of claims 2 to 3,
wherein a part of the sequence of instructions is selected and the protocol tester plays back this part of the sequence of instructions for the simulation.

5. Method according to one of claims 2 to 4,
wherein the protocol tester automatically augments the sequence of instructions with missing instructions needed to carry out the simulation.

6. Method according to one of claims 2 to 5,
wherein the protocol tester generates different cell powers in the test scenario and so tests the mobile radio device (120') with respect to its receiving and transmitting power.

7. Method according to one of claims 1 to 6,
wherein the sequence of instructions is outputted first and is editable by means of a graphic user interface, and wherein the test device (600) is controlled with the edited sequence of instructions.

8. Method according to one of claims 1 to 7,
wherein in a first mode during the simulation the test device (600) anticipates response signals (300") exactly as they were received during the determination of the information about the mobile radio network, and the test scenario is terminated if a response signal (300") other than the anticipated response signal (300") is received.

9. Method according to one of claims 1 to 8,
wherein in a second mode during the simulation received response signals (300") can deviate from anticipated response signals (300') in their sequence from those received during the determination of the information about the mobile radio network, and the test scenario is continued.

10. Method according to one of claims 8 or 9,
wherein bit for bit matching of complete response signals (300") and the anticipated response signal (300') is carried out on the basis of individual response signals (300") of the mobile radio device (120').

## Revendications

1. Procédé pour tester un appareil de téléphonie mobile avec les étapes de procédé suivantes :
détermination d'informations au sujet d'au moins un réseau de téléphonie mobile réel au moyen d'un appareil de mesure (1'), ainsi que d'informations supplémentaires au sujet du réseau de téléphonie mobile au moyen d'un appareil de téléphonie mobile (120),
où l'appareil de téléphonie mobile (120) est prévu pour transmettre à un dispositif d'analyse (230) les signaux (300) reçus d'au moins une station de base (110) du réseau de téléphonie mobile et les signaux de réponse (300') envoyés à la au moins une station de base (110),
analyse des informations obtenues par l'appareil de mesure (1') et des informations supplémentaires obtenues par l'appareil de téléphonie mobile (120), au moyen du dispositif d'analyse (230), comprenant l'analyse de tous les signaux (300) reçus sur l'appareil de téléphonie mobile (120) et de tous les signaux de réponse (300') envoyés, au moyen du dispositif d'analyse (230),
conversion des informations et des informations supplémentaires en une séquence d'instructions commune, et
simulation du réseau de téléphonie mobile réel par la réalisation d'au moins une partie de la séquence d'instructions par un appareil de test (600).

2. Procédé selon la revendication 1, où l'appareil de test (600) est un testeur de protocole qui exécute la séquence d'instructions en interaction avec un appareil de téléphonie mobile (120'), dans un scénario de test.

3. Procédé selon la revendication 2, où, dans le scénario de test, le testeur de protocole simule plusieurs réseaux de téléphonie mobile différents.

4. Procédé selon l'une des revendications 2 à 3, où une partie de la séquence d'instructions est choisie et en ce que le testeur de protocole exécute cette partie de la séquence d'instructions pour la simulation.

5. Procédé selon l'une des revendications 2 à 4, où la séquence d'instructions est complétée automatiquement par le testeur de protocole en ce qui concerne des instructions manquantes qui sont nécessaires pour la réalisation de la simulation.

6. Procédé selon l'une des revendications 2 à 5, où le testeur de protocole produit dans le scénario de test différentes performances cellulaires et teste ainsi l'appareil de téléphonie mobile (120') en ce qui concerne ses performances de réception et d'émission.

7. Procédé selon l'une des revendications 1 à 6, où la séquence d'instructions est tout d'abord émise et peut être éditée par le biais d'une interface utilisateur graphique, où l'appareil de test (600) est commandé avec la séquence d'instructions éditée.

8. Procédé selon l'une des revendications 1 à 7, où l'appareil de test (600) dans un premier mode pendant la simulation attend les signaux de réponse (300") exactement tels qu'ils ont été reçus lors de la détermination des informations du réseau de téléphonie mobile, et en ce que, quand un signal de réponse différent du signal de réponse (300") attendu est reçu, le scénario de test est terminé.

9. Procédé selon l'une des revendications 1 à 8, où, dans un second mode pendant la simulation les signaux de réponse (300") reçus peuvent s'écarter, dans leur succession, des signaux de réponse (300') attendus, tels qu'ils ont été reçus lors de la détermination des informations du réseau de téléphonie mobile, où le scénario de test est poursuivi.

10. Procédé selon l'une des revendications 8 ou 9, où, sur la base de signaux de réponse (300") individuels de l'appareil de téléphonie mobile (120') un ajustement exact quant aux bits de signaux de réponse (300") complets et du signal de réponse (300') attendu est réalisé.
